# EUROPEAN PATENT APPLICATION

(11) **EP 1 273 831 A2**
(43) Date of publication of application: **08.01.2003**
(21) Application number: 02015085.0
(22) Date of filing: 05.07.2002
(51) Int. Cl.: F16H 61/04, F16H 3/12

(54) **Input shaft brake control for synchronizing a semi-automatic transmission**

(30) Priority: 06.07.2001 JP 2001206658
(71) Applicant: ISUZU MOTORS LIMITED, Shinagawa-ku, Tokyo (JP)
(72) Inventor: Koga, Hidetaka, Fujisawa-shi, Kanagawa (JP)
(74) Representative: Schaumburg, Thoenes & Thurn

(57) **Abstract**

It is an object of the present invention to provide a rotation matching mechanism for an automatic clutch type transmission which makes it possible to obtain superior friction characteristics in a rotation matching braking device that synchronizes the gears of the transmission during up-shifting. The present invention provides an automatic clutch type transmission comprising a speed-change clutch (3) which engages or disengages the driving force of the engine (E), a transmission (T/M) which is connected to the speed-change clutch (3) so as to transmit the abovementioned driving force, a shift lever (21) which is used to shift the gears of the transmission (T/M), and a control device (22) which automatically engages and disengages the abovementioned speed-change clutch (3) as a result of the operation of the shift lever (21), wherein a rotation matching braking device (70) is disposed on the input shaft (8) of the transmission (T/M) so that this braking device (70) reduces the speed of rotation of the input shaft (8) of the transmission (T/M) during up-shifting and thus synchronizes the gear (M) to which the shift is being made.

## Description

The present invention relates to an automatic clutch type transmission which comprises a speed-change clutch that engages or disengages the driving force of the engine, a transmission which is connected to the speed-change clutch so as to transmit [the abovementioned driving force], a shift lever which is used to change the gears of the transmission, and a control device which automatically engages and disengages the speed-change clutch as a result of the operation of the shift lever; more particularly, the present invention relates to a rotation matching mechanism for an automatic clutch type transmission which is used to synchronize the gears of the transmission in the case of up-shifting.

Automatic clutch type transmissions include transmissions that are equipped with a speed-change clutch consisting of a wet type multi-plate clutch which is connected to the output shaft of the engine mounted in the vehicle via a fluid coupling (including torque converters), and which engages and disengages the driving force of the engine, a transmission which is connected to the speed-change clutch so as to transmit the abovementioned driving force, a shift lever which is used to change the gears of the transmission, and a control device which automatically engages and disengages the speed-change clutch as a result of the operation of the shift lever.

In such an automatic clutch type transmission, there is no clutch pedal as in a vehicle with a manual transmission; however, the control device automatically controls the engagement and disengagement of the speed-change clutch to change the gears in accordance with the operation of the shift lever.

The driving force of the engine during operation is transmitted to the input shaft of the transmission via a fluid coupling and the speed-change clutch, and this driving force is transmitted from the input shaft to a hub via a countershaft, a counter gear disposed on this countershaft, a main gear that engages with this counter gear, a dog that rotates integrally with the main gear, and a sleeve that is spline-engaged with this dog, so that the driving force is transmitted to the output shaft of the hub. During the shifting operation, the speed-change clutch is disengaged, and the spline-engaged sleeve is moved so that the dog of the current speed and the hub are separated. Then, after the rotation of the hub and the rotation of the dog of the speed to which the shift is being made are matched by the shifting operation, the sleeve of this speed is engaged with the dog, and the speed-change clutch is engaged.

Ordinarily, in a transmission of this type, a rotation matching mechanism (braking device) is installed on the countershaft in order to synchronize the rotation of the hub and the rotation of the dog to which a shift is being made when the gears are changed on the basis of the operation of the shift lever. In the case of up-shifting, the rotation of the countershaft is inhibited, and the rotation of the dog of the main gear speed to which a shift is being made is matched with the rotation of the hub that is to be connected, after which the sleeve on the side of this hub is engaged with the dog.

However, the diameter of the input counter gear on the side of the countershaft is larger than that of the main gear on the side of the input shaft that transmits the driving force from the input shaft to the countershaft, so that the rotation is transmitted from the input shaft to the countershaft at a speed reduced by a factor of approximately 1.8. Accordingly, in cases where a gear rotation matching function is provided by installing a braking device on the countershaft, the size of the braking device is increased so that a large space is required.

Furthermore, the braking device consists of a friction plate that is disposed on the rotating side and a pressing plate that is disposed on the fixed side, and a braking force is generated by the pressing contact of these plates with each other. However, in the case of installation on the auxiliary shaft, because of installation space considerations, the braking device is installed in a gear box in which the counter gears, dogs, hubs and the like of the transmission are accommodated; as a result, the braking device is exposed to lubricating oil inside this gear box, so that the friction characteristic is poor.

Accordingly, it is an object of the present invention to provide a rotation matching mechanism for an automatic clutch type transmission which solves the abovementioned problems, and which makes it possible to obtain superior friction characteristics in the braking device that synchronizes the gears of the transmission when up-shifting.

In order to achieve the abovementioned object, the invention of claim 1 is a rotation matching mechanism for an automatic clutch type transmission comprising a speed-change clutch which engages or disengages the driving force of the engine, a transmission which is connected to the speed-change clutch so as to transmit the abovementioned driving force, a shift lever which is used to change the gears of the transmission, and a control device which automatically engages and disengages the speed-change clutch as a result of the operation of the shift lever, wherein a rotation matching braking device that reduces the speed of rotation of the input shaft of the transmission during up-shifting and thus synchronizes the gear to which the shift is being made is disposed on the input shaft of the transmission.

The invention of claim 2 is the rotation matching mechanism for an automatic clutch type transmission according to claim 1, wherein the rotation matching braking device comprises a friction plate which rotates together with the input shaft of the abovementioned transmission, a pressing plate which is disposed on the side of the clutch housing so that this pressing plate can move toward or away from the abovemeritioned friction plate, and a pushing piston which is disposed on the housing side of the abovementioned transmission so that this pushing piston presses the friction plate and pressing plate against each other.

The invention of claim 3 is the rotation matching mechanism for an automatic clutch type transmission according to claim 2, wherein the operation of the abovementioned pushing piston is performed by a control mechanism comprising a fluid pipe channel which is used to supply and discharge piston fluid pressure, an electromagnetic valve which supplies a fluid to the pipe channel and discharges this fluid from the pipe channel, and a control device which controls the ON/OFF operation of the abovementioned electromagnetic valve, and wherein the abovementioned control device performs ON/OFF control on the basis of the vehicle speed and the gear to which a shift is to be made.

The invention of claim 4 is the rotation matching mechanism for an automatic clutch type transmission according to any of claims 1 through 3, wherein the abovementioned rotation matching braking device is disposed inside the same housing as the abovementioned speed-change clutch, and is controlled using the same fluid.

The invention of claim 5 is the rotation matching mechanism for an automatic clutch type transmission according to claim 2, wherein the abovementioned rotation matching braking device is also used as a gear parking brake.
Fig. 1 is a flow chart which illustrates one embodiment of the present invention;
Fig. 2 is a diagram which shows the schematic construction of the apparatus of the present invention;
Fig. 3 is a sectional view which shows details of the clutch mechanism consisting of a fluid coupling and wet type multi-plate clutch shown in Fig. 2; and
Fig. 4 is a diagram which shows details of the hydraulic circuit that operates the fluid coupling, wet type multi-plate clutch and rotation matching braking device shown in Fig. 2

A preferred embodiment of the present invention will be described in detail below with reference to the attached figures.

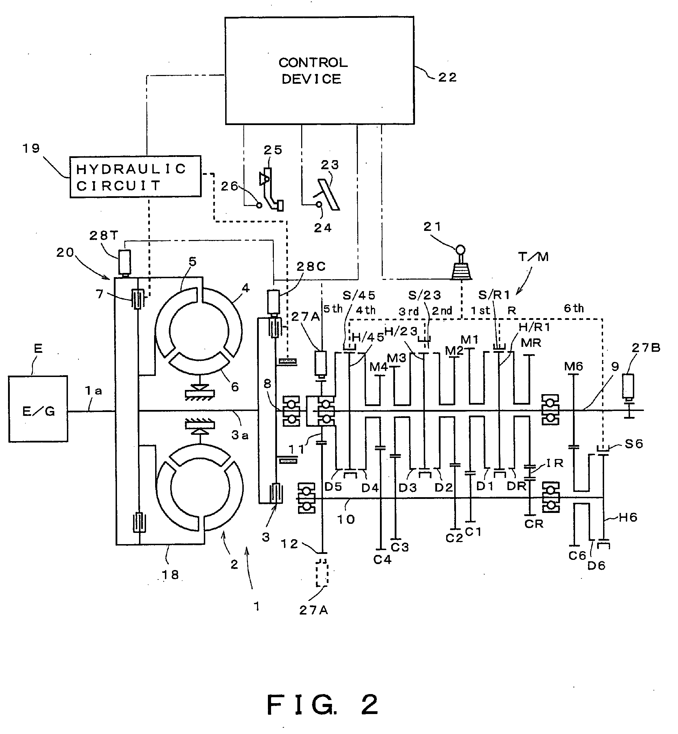

First, the schematic construction of the power transmission apparatus of a vehicle will be described with reference to Fig. 2.

As is shown in Fig. 2, a transmission T/M is connected to an engine E via a clutch mechanism 1. The clutch mechanism 1 consists of a fluid coupling 2 and a wet type multi-plate clutch (speed-change clutch) 3. The fluid coupling 2 is disposed at an intermediate point in the power transmission path that extends from the engine E to the transmission T/M, on the upstream side of this power transmission path, and the wet type multi-plate clutch 3 is disposed in series on the downstream side of the same power transmission path. Note that the term "fluid coupling" used here has a broad meaning that includes torque converters, and a torque converter is also actually used in the present embodiment.

The fluid coupling 2 comprises a pump part 4 which rotates integrally with a casing 18 that is connected to the output shaft (crankshaft) 1a of the engine E, a turbine part 5 which is caused to face the pump part 4 inside the casing 18, and which is connected to the input side of the clutch 3, and a stator part 6 which is interposed between the turbine part 5 and the pump part 4. Furthermore, this fluid coupling 2 has a lock-up device 20 consisting of a lock-up clutch 7 which couples and separates the pump part 4 and turbine part 5, and a hydraulic circuit 19 that operates this lock-up clutch 7.

The input side of the wet type multi-plate clutch 3 is connected to the turbine part 5 via an input shaft 3a, and the output side is connected to the input shaft 8 of the transmission T/M so that this clutch engages and disengages the fluid coupling 2 and transmission T/M. Ordinarily, this clutch is driven in the disengaging direction by a spring (not shown in the figures), and is engaged by hydraulic pressure from the hydraulic circuit 19.

The transmission T/M has an input shaft 8, an output shaft 9 which is disposed coaxially with this input shaft 8, and a countershaft 10 which is disposed parallel to these other shafts. An input main gear 11 is provided on the input shaft 8. A first-speed main gear M1, second-speed main gear M2, third-speed main gear M3, fourth-speed main gear M4 and reverse main gear MR are respectively shaft-supported on the output shaft 9, and a sixth-speed main gear M6 is fastened to the output shaft 9. An input counter gear 12 which engages with the input main gear 11, a first-speed counter gear C1 which engages with the first-speed main gear M1, a second-speed counter gear C2 which engages with the second-speed main gear M2, a third-speed counter gear C3 which engages with the third-speed main gear M3, a fourth-speed counter gear C4 which engages with the fourth-speed main gear M4, and a reverse counter gear CR which engages with the reverse main gear MR via an idle gear IR, are fastened to the countershaft 10, and a sixth-speed counter gear C6 which engages with the sixth-speed main gear M6 is shaft-supported on the countershaft 10.

In this transmission T/M, when the sleeve S/R1 which is spline-engaged with the hub H/R1 fastened to the output shaft 9 is spline-engaged with the dog DR of the reverse main gear MR, the output shaft 9 rotates in reverse, and when the abovementioned sleeve S/R1 is spline-engaged with the dog D1 of the first-speed main gear M1, the output shaft 9 rotates at a speed corresponding to the first speed. Furthermore, when the sleeve S/23 that is spline-engaged with the hub H/23 fastened to the output shaft 9 is spline-engaged with the dog D2 of the second-speed main gear M2, the output shaft 9 rotates at a speed corresponding to the second speed, and when the abovementioned sleeve S/23 is spline-engaged with the dog D3 of the third-speed main gear M3, the output shaft 9 rotates at a speed corresponding to the third speed.

Furthermore, when the sleeve S/45 that is spline-engaged with the hub H/45 fastened to the output shaft 9 is spline-engaged with the dog D4 of the fourth-speed main gear M4, the output shaft 9 rotates at a speed corresponding to the fourth speed, and when the abovementioned sleeve S/45 is spline-engaged with the dog D5 of the input main gear 11, the output shaft 9 rotates at a speed corresponding to the fifth speed (direct coupling). Furthermore, when the sleeve S6 that is spline-engaged with the hub H6 fastened to the countershaft 10 is spline-engaged with the dog D6 of the sixth-speed counter gear C6, the output shaft 9 rotates at a speed corresponding to the sixth speed.

The abovementioned respective sleeves S are manually operated by the shift lever 21 inside the driver's compartment via a shift fork and shift rod (not shown in the figures).

Furthermore, when gears are to be changed by the shift lever 21, the wet type multi-plate clutch 3 is first disengaged by the operation of the shift lever 21 so that the sleeve S that was spline-engaged prior to the shifting operation is separated from the corresponding dog D, thus placing the transmission in neutral. Then, after the rotation of the dog D of the main gear M to which a shift is to be made and the rotation of the sleeve S of the [corresponding] hub H are matched (as will be described later), the sleeve S is moved and spline-engaged with the corresponding dog D so that the transmission is shifted from the neutral position to the gear stage of the speed to which this shift is being made, and the wet type multi-plate clutch 3 is engaged.

The neutral and gear positions resulting from the operation of this shift lever 21 are detected by a shift sensor and stroke sensor (not shown in the figures), and this information is inputted into a control device 22.

Furthermore, the amount by which the accelerator pedal 23 is depressed is detected by a sensor 24, and this amount of depression is inputted into the control device 22. Moreover, the amount of depression of the brake pedal 25 is detected by a sensor 26, and this amount of depression is inputted into the control device 22.

A rotation sensor 27A which detects the rpm of the input main gear 11 of the transmission T/M or the rpm of the input counter gear 12 that engages with the input main gear 11, a rotation sensor (vehicle speed sensor) 27B which detects the rotation of the output shaft, a rotation sensor 28T which detects the rotation of the engine, and a rotation sensor 28C which detects the rotation of the clutch 3, are provided, and the detection values of these rotation sensors 27A, 27B, 28T and 28C are inputted into the control device 22.

A rotation matching braking device 70 which is used as an automatic clutch transmission rotating matching mechanism, and which also serves as a gear parking brake (braking device), is disposed on the input shaft 8 of the transmission T/M.

Lock-up control of the control device 22 is accomplished as follows: in a gear-in state, the lock-up device 20 of the fluid coupling 2 is switched to the disengaged side when the engine rpm is (for example) 800 rpm or less, and the lock-up device 20 is switched to the engaged side when the engine rpm is 1000 rpm or greater.

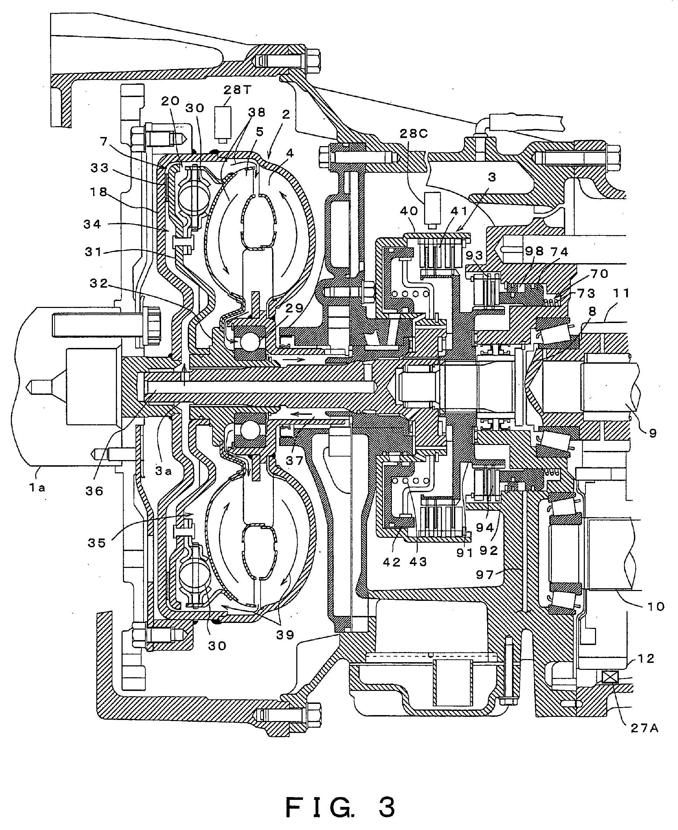

Next, details of the fluid coupling 2, lock-up device 20, wet type multi-plate clutch 3 and rotation matching braking device 70 will be described with reference to Fig. 3.

In Fig. 3, the pump part 4 of the fluid coupling 2 is integrally disposed in the casing 18 that is connected to the output shaft (crankshaft) 1a of the engine. The pump part 4 is installed by means of bearings 29 so that the pump part 4 is free to rotate relative to the input shaft 3a of the clutch 3. Furthermore, inside the casing 18, the turbine part 5 is connected to the input shaft 3a of the clutch 3 so as to face the pump part 4. Note that for ease of explanation, the stator part 6 has been omitted from the figures.

A clutch disk 31 is connected to the turbine part 5 via a damper spring 30. The clutch disk 31 is installed facing the casing 18 so that this clutch disk 31 can slide in the axial direction relative to the turbine hub 32 of the turbine part 5, and a clutch facing 33 is mounted on the outside part of the clutch disk 31 that faces the abovementioned casing 18.

As a result of [the installation of] this clutch disk 31, an outside chamber 34 is formed between the casing 18 and the clutch disk 31, and an inside chamber 35 is formed between the turbine part 5 and the clutch disk 31.

An inside passage 36 is formed in the input shaft 3a, and an outside passage 37 is formed around the outer circumference of this input shaft 3a.

In this fluid coupling 2, when the lock-up device 20 is disengaged, hydraulic fluid flows from the inside passage 36 into the outside chamber 34 between the casing 18 and the clutch disk 31, and this hydraulic fluid flows from the outside chamber 34 through the turbine part 5 and pump part 4 as indicated by the arrow 38 shown in the figures. A portion of this hydraulic fluid flows into the outside passage 37 via the bearings 29, and transmits the rotation of the pump part 4 to the turbine part 5. Furthermore, when the lock-up device 20 is engaged, the flow of the hydraulic fluid is switched to the reverse of the abovementioned flow. Specifically, the hydraulic fluid flows from the outside passage 37 through the pump part 4 and turbine part 5 via the bearings 29, as indicated by the arrow 39 shown in the figures, and then flows into the inside chamber 35. As a result, the clutch facing 33 of the clutch disk 31 makes frictional contact with the casing 18, so that the rotation of the casing 18 is transmitted to the turbine part 5 from the clutch disk 31 via the damper spring 30, and the pump part 4 and turbine part 5 are mechanically coupled.

In the wet type multi-plate clutch 3, respective pluralities of clutch plates 41 are differently spline-engaged with the input side and output side inside a clutch casing 40 filled with oil, and engagement and disengagement of the clutch are accomplished by pressing these clutch plates 41 against each other, or releasing the clutch plates 41, by means of a clutch piston 42. The clutch piston 42 is constantly driven in the direction of disengagement by a clutch spring 43, and the clutch 3 is engaged when a hydraulic pressure that exceeds this driving force is applied to the clutch piston 42.

Furthermore, the rotation matching braking device 70 consists of a friction plate 94 which rotates together with the drum 91 side (input side) between a drum 91 installed on the input shaft 8 of the transmission T/M and the housing 92 (fixed side) of the transmission T/M, a pressing plate 93 which is installed on the side of the housing 92 so that this pressing plate 93 can move toward or away from the friction plate 94, and a pushing piston 74 which is disposed on the side of the housing 92 of the transmission T/M so that this pushing piston 74 presses the friction plate 94 and pressing plate 93 together. Under ordinary conditions, the friction plate 94 and pressing plate 93 are joined together as a result of the pushing piston 74 being pushed by a spring 73, whereby the braking performed by the gear-in parking brake is driven into a constant operating state. Furthermore, the braking is released (disengaged) by supplying hydraulic fluid to the cylinder chamber 98 of the pushing piston 94 from a fluid pipe channel 97 used for hydraulic fluid supply.

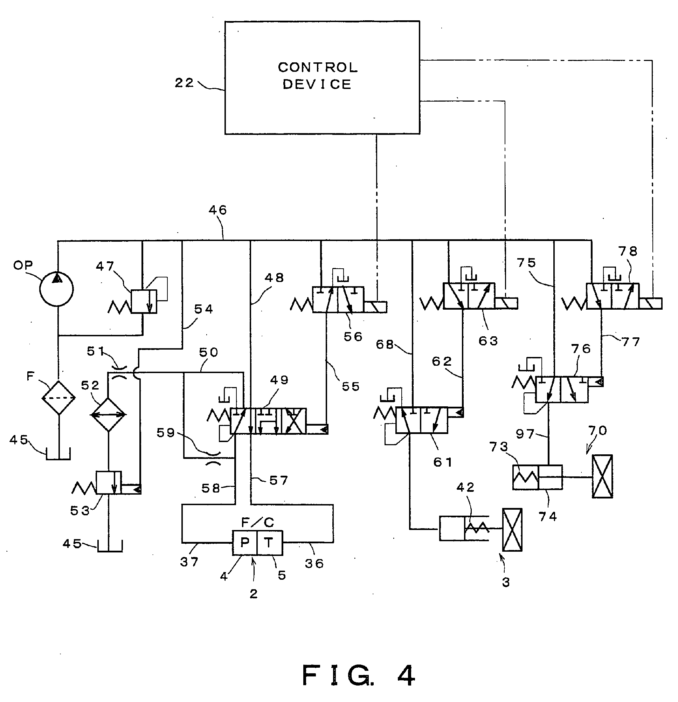

Fig. 4 shows details of the hydraulic circuit 19 that operates the fluid coupling 2, lock-up device 20, wet type multi-plate clutch 3 and rotation matching mechanism (braking device) 70.

As is shown in Fig. 4, oil from an oil tank 45 is sucked in and discharged by a hydraulic pump OP via a filter F. The discharge pressure is regulated by a relief valve 47 so that the hydraulic fluid that is supplied to the hydraulic fluid supply line 46 is maintained at a constant pressure.

A lock-up five-way valve 49 which switches the hydraulic fluid to the fluid coupling 2 is connected to the hydraulic fluid supply line 46 via a line 48. A hydraulic fluid return line 50 which returns the hydraulic fluid to the oil tank 45 is connected to this lock-up five-way valve 49, and a throttle valve 51, cooler 52 and opening-and-closing valve 53 are connected to the hydraulic fluid return line 50.

The opening-and-closing valve 53 is ordinarily closed, and is opened by hydraulic fluid from a pilot line 54 that is connected to the hydraulic fluid supply line 46.

The switching of the lock-up five-way valve 49 is controlled by a lock-up clutch solenoid 56 that is connected to the pilot line 55 of the hydraulic fluid supply line 46. Under ordinary conditions (when the lock-up clutch solenoid 56 is OFF), hydraulic fluid from the line 48 flows from the line 57 into the outside passage 37 explained in Fig. 2, and flows into the turbine part 5 and pump part 4; this hydraulic fluid passes through the line 58 from the inside passage 36, and is returned to the hydraulic fluid return line 50 via the lock-up five-way valve 49. Furthermore, when the lock-up clutch solenoid 56 is actuated, the lock-up five-way valve 49 is switched by hydraulic fluid from the pilot line 55, so that the hydraulic fluid from the line 48 flows into the inside passage 36 from the line 58, and flows into the pump part 4 and turbine part 5. This hydraulic fluid is supplied to the line 57, and the side of the line 57 is closed. In this case, a portion of the oil that is supplied to the line 58 is returned to the hydraulic fluid return line 50 via the throttle valve 59.

Furthermore, the wet type multi-plate clutch 3 is connected to the hydraulic fluid supply line 46 via a line 60, and a clutch switching three-way valve 61 is connected to this line 60. The actuation of this clutch switching three-way valve 61 is controlled by a variable-speed clutch control solenoid 63 which is connected to the pilot line 62 of the hydraulic fluid supply line 46.

In this wet type multi-plate clutch 3, the clutch switching three-way valve 61 is in a closed position under ordinary conditions. In this state, the clutch is driven in the direction of disengagement by the spring 42. When a pilot control three-way electromagnetic valve 63 is actuated in the opening direction, the clutch switching three-way valve 61 is opened by hydraulic fluid from the pilot line 62 so that hydraulic fluid is supplied to the wet type three-way clutch 3, and the clutch is actuated in the direction of engagement.

In the rotation matching braking device 70, a braking force is applied by the spring 73 under ordinary conditions. When the pushing piston 74 is actuated, the gear parking brake force is released so that the device can be disengaged. Furthermore, the braking force can be regulated by regulating the degree of advance and retraction of the pushing piston 74.

Specifically, the pushing piston 74 is connected to the hydraulic fluid supply line 46 via a line 75. A braking three-way valve 76 is connected to this line 75, and the actuation of this braking three-way valve 76 is controlled by a brake control solenoid 78 that is connected to the pilot line 77 of the hydraulic fluid supply line 46. When the duty ratio of the pulse signal that is sent to the brake control solenoid 78 is 0%, the control device 22 places the brake control solenoid 78 in a state in which the port shown in Fig. 4 is connected. Accordingly, the pushing piston 74 is not actuated but maintained in an extended state by the spring 76, so that the braking force of the rotation matching braking device 70 is maintained. Then, when a signal with a duty ratio of 100% is outputted to the brake control solenoid 78, the port of the brake control solenoid 78 is switched, and the braking three-way valve 76 is switched, whereby hydraulic fluid from the hydraulic fluid supply line 46 is supplied to the pushing piston 74 via the line 75 and hydraulic fluid supply line 97. Consequently, the pushing piston 74 is retracted, so that the braking force of the rotation matching braking device 70 is released.

Furthermore, in the regulation of the braking force, the control device 22 can regulate the amount of hydraulic fluid that is sent to the pushing piston 74 from the braking three-way valve 76 by outputting a duty pulse signal, whose duty ratio is appropriately varied between 0 and 100%, to the brake control solenoid 78; in this way, the control device 22 can regulate the braking force.

Furthermore, the lock-up clutch solenoid 56 and the variable-speed clutch control solenoid 63 are also actuated by electrical signals from the control device 22.

Next, the operation of the driving force transmission device of the present embodiment will be described.

In this driving force transmission device, the driving force of the engine E is transmitted via the fluid coupling 2, wet type multi-plate clutch 3 and transmission T/M, in that order.

When the vehicle starts moving, the lock-up clutch 7 and the wet type multi-plate clutch 3 are disengaged. When the driver shifts to the starting gear by operating the shift lever 21, the wet type multi-plate clutch 3 is engaged. In this state, the turbine part 5 of the fluid coupling 2 is stopped from the side of the driven wheels; accordingly, only the pump part 4 rotates, so that a creeping force is generated. Afterward, when the brake pedal 25 is released or the accelerator pedal 23 is depressed, the turbine part 5 rotates so that the driving force is transmitted to the side of the transmission T/M.

After starting, speed-change operations are performed using the shift lever 21; in each case, the wet type multi-plate clutch 3 is disengaged and engaged.

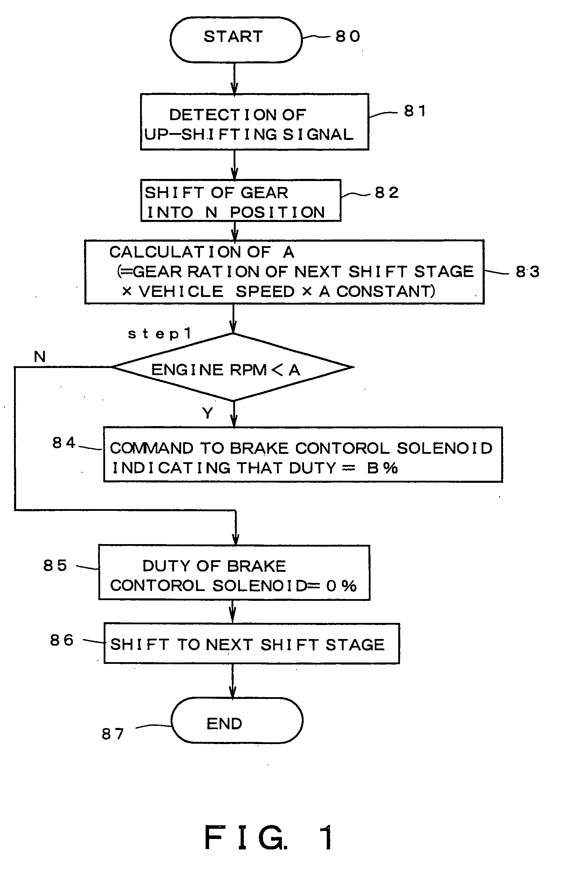

Fig. 1 shows a flow chart of the rotation matching mechanism of the automatic clutch type transmission when up-shifting is performed by the control device 22 shown in Fig. 2.

First, the control device 22 detects the engine rotation by means of the rotation sensor 28T, and detects the vehicle speed by means of the rotation sensor 27B. Furthermore, in regard to the operating state of the shift lever 21, the control device 22 detects the gear and neutral position from the shift sensor and stroke sensor.

As is shown in Fig. 1, the control process starts (80), and the up-shift signal is detected (81). After the gear is shifted into neutral (82), the envisioned rpm A based on the speed to which this shift is to be made (= gear ratio of the next shift stage × vehicle speed × a constant) is calculated (83).

Next, in the judgement made in step 1, the actual engine rpm and the envisioned rpm A are compared, and if the envisioned rpm A is higher than the engine rpm (YES), a command is sent (84) indicating that the duty ratio of the duty pulse that is outputted to the brake control solenoid 78 is to be B%. As a result, the pushing piston 74 shown in Fig. 4 returns an amount of the oil accumulated inside the cylinder chamber corresponding to a duty ratio of B% to the tank 45 by way of the braking three-way valve 76, so that the spring 73 is extended by the pushing piston 74, thus causing a braking force that corresponds to a duty ratio of B% to be applied. Consequently, the rotation on the side of the input shaft 8 is braked. Afterward, the processing returns to the judgement of step 1, and the engine rpm and envisioned rpm A are compared; here, if the envisioned rpm A is higher (YES), a command is sent (84) indicating that the duty ratio of the duty pulse successively output to the brake control solenoid 78 is to be B%, so that the braking force of the rotation matching braking device 70 is regulated. When the engine rpm drops below the envisioned rpm A in the judgement made in step 1, that is, when synchronization is achieved (NO), the duty ratio of the brake control solenoid 78 is returned to 0% (85), so that the braking force of the rotation matching braking device 70 is released; accordingly, a shift is made (86) to the next shift stage, and control is ended (87).

Thus, when up-shifting, the rotation of the input shaft 8 is braked using the braking force of the rotation matching braking device 70, so that the rotation of the dog D of the gear stage to which a shift is being made and the rotation of the hub H of the sleeve S that is being shifted can by synchronized.

In particular, as is shown in Fig. 3, this rotation matching braking device 70 is located on the side of the fluid coupling 2 and wet type multi-plate clutch 3, so that ATF can be used for brake lubrication. Accordingly, superior frictional characteristics are obtained, and a gear-in parking function in cold areas can also be used.

Furthermore, rotation matching when up-shifting was described in the abovementioned embodiment. However, rotation matching is also performed when down-shifting; in this case, the control device 22 controls the rotation of the engine so that synchronization is obtained.

To summarize, in the present invention, as a result of the installation of a rotation matching mechanism used for the synchronization of rotation on the input shaft side of the transmission, a small size and superior frictional characteristics are obtained, and a gear-in parking function in cold areas can also be utilized.

## Claims

1. A rotation matching mechanism for an automatic clutch type transmission which comprises a speed-change clutch which engages or disengages the driving force of the engine; a transmission which is connected to the speed-change clutch so as to transmit said driving force; a shift lever which is used to shift the gears of the transmission; and a control device which automatically engages and disengages said speed-change clutch as a result of the operation of the shift lever,
wherein a rotation matching braking device is disposed on the input shaft of the transmission so that this braking device reduces the speed of rotation of the input shaft during up-shifting and thus synchronizes the gear to which the shift is being made.

2. The rotation matching mechanism for an automatic clutch type transmission according to claim 1, wherein the rotation matching braking device comprises:
a friction plate which rotates together with the input shaft of said transmission;
a pressing plate which is disposed on the side of the clutch housing so that this pressing plate can move toward or away from said friction plate; and
a pushing piston which is disposed on the housing side of said transmission so that this pushing piston presses the friction plate and pressing plate against each other.

3. The rotation matching mechanism for an automatic clutch type transmission according to claim 2, wherein the operation of said pushing piston is performed by a control mechanism comprising a fluid pipe channel which is used to supply and discharge a piston fluid pressure, an electromagnetic valve which supplies a fluid to and discharges this fluid from the pipe channel, and a control device which controls the ON/OFF operation of said electromagnetic valve, and wherein said control device performs ON/OFF control on the basis of the vehicle speed and the gear to which a shift is to be made.

4. The rotation matching mechanism for an automatic clutch type transmission according to claim 1 through claim 3, wherein said rotation matching braking device is disposed inside the same housing as said speed-change clutch, and is controlled using the same fluid.

5. The rotation matching mechanism for an automatic clutch type transmission according to claim 2, wherein said rotation matching braking device is also used as a gear parking brake.
